# EUROPEAN PATENT APPLICATION

(11) **EP 3 771 959 A1**
(43) Date of publication of application: **03.02.2021**
(21) Application number: 19189428.6
(22) Date of filing: 31.07.2019
(51) Int. Cl.: G06F 1/16, H04M 1/02, H05K 5/00, H05K 5/02, B32B 1/02, B32B 3/06, B32B 7/022

(54) **PORTABLE ELECTRONIC DEVICE HOUSINGS HAVING HYBRID LAMINATE SIDEWALLS AND METHODS OF MAKING THE SAME**

(71) Applicant: SHPP Global Technologies B.V., 4612 PX Bergen op Zoom (NL)
(72) Inventor: KULKARNI, Sandeep, 4612 PX Bergen op Zoom (NL); KASHIF, Syed Muhammad, 4612 PX Bergen op Zoom (NL); HOCKER, Thomas, 4612 PX Bergen op Zoom (NL); THEOFANOUS, Theofanis, 4612 PX Bergen op Zoom (NL); DAVIS, Scott, 4612 PX Bergen op Zoom (NL); THATTAI, Balaji, 4612 PX Bergen op Zoom (NL)
(74) Representative: J A Kemp LLP

(57) **Abstract**

A portable electronic device housing can comprise a plate defining a front major surface (22), a back major surface (26) opposite the front major surface, and a periphery. A sidewall (18) can be coupled to the plate with the sidewall disposed along at least a majority of the plate's periphery and extending away from the plate's back major surface in a direction opposite the plate's front major surface. The sidewall can define opposing interior (34a) and exterior (34b) surfaces and include a rim (58) that comprises one or more laminates (62). Each of the laminates can comprise one or more first laminae (66a), each including glass fibers dispersed within a polymeric matrix material, and one or more second laminae (66b), each including ceramic fibers and/or carbon fibers dispersed within a polymeric matrix material, wherein at least one of the first lamina(e) is disposed closer to the exterior surface of the sidewall than is each of the second lamina(e).

## Description

### TECHNICAL FIELD

The present invention relates generally to portable electronic device housings and more particularly, but without limitation, to housings having a sidewall with a rim that comprises one or more hybrid laminates.

### BACKGROUND

Portable electronic devices such as mobile phones, tablets, watches, laptops, and the like typically comprise a housing to contain and protect electronic components thereof. Portable electronic device housings should have adequate stiffness and impact resistance to sustain impacts during everyday use, such as when the electronic device is dropped. And, at least a portion of the housing generally must be radiofrequency (RF) transparent to permit transmission of electromagnetic signals through the housing and/or wireless charging. Some housings incorporate metallic materials to achieve adequate strength; however, such materials may not be RF transparent and thus cannot be used to define all of the housing. Metallic housings may also impose restrictions on where certain portable electronic device components (e.g., antennas and/or inductive chargers) can be placed. There accordingly is a need in the art for portable electronic device housings that can provide suitable stiffness and impact resistance while providing RF transparency over at least a portion of the housing.

### SUMMARY

Some of the present housings address the need in the art for adequately stiff, impact-resistant, and RF transparent housings with a sidewall that is disposed along at least a majority of a periphery of a plate and includes a rim comprising one or more hybrid laminates. Each of the hybrid laminate(s) can include one or more first laminae that each includes fibers of a first type-which can be fibers with a relative high impact-resistance, such as glass fibers-and one or more second laminae that each includes fibers of a second type-which can be relatively stiff fibers, such as ceramic fibers (which can be RF transparent) and/or carbon fibers-distinct from the first type. The sidewall can define opposing interior and exterior surfaces and, for each of the hybrid laminate(s), at least one of the first lamina(e) can be disposed closer to the exterior surface of the sidewall than is each of the second lamina(e), optionally such that that first lamina defines at least a portion of the exterior surface of the sidewall. In this manner, the exterior first lamina can protect second lamina(e) from impacts that the sidewall may sustain to mitigate sidewall damage that might otherwise occur if one of the second lamina(e) (whose fibers may be relatively brittle) sustained an impact directly. The protected second lamina(e) can render the sidewall relatively stiff. As such, the sidewall with its hybrid laminate(s) can achieve a better combination of impact resistance and stiffness than if the sidewall consisted of non-hybrid laminates and/or metallic elements.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed embodiment, the terms "substantially" and "about" may be substituted with "within [a percentage] of' what is specified, where the percentage includes 0.1, 1, 5, and 10 percent.

The terms "comprise" and any form thereof such as "comprises" and "comprising," "have" and any form thereof such as "has" and "having," and "include" and any form thereof such as "includes" and "including" are open-ended linking verbs. As a result, an apparatus that "comprises," "has," or "includes" one or more elements possesses those one or more elements, but is not limited to possessing only those elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/include/have - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

Further, a device or system that is configured in a certain way is configured in at least that way, but it can also be configured in ways other than those specifically described.

The feature or features of one embodiment may be applied to other embodiments, even though not described or illustrated, unless expressly prohibited by this disclosure or the nature of the embodiments.

Some details associated with the embodiments described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG.** 1A is a perspective view of an example portable electronic device housing that comprises a plate and a sidewall having a rim that includes one or more hybrid laminates.
**FIG. 1B** is an exploded view of the housing of FIG. 1A.
**FIGs. 1C** and **1D** are top and bottom views, respectively, of the housing of FIG. 1A.
**FIG. IE** is a partial cross-sectional end view of the housing of FIG. 1A, taken along line 1E-1E of FIG. 1C.
**FIGs. 2A** and **2B** are cross-sectional views of a mold that can be used in some of the present methods to form a polymeric body of a sidewall that connects the rim to the plate.

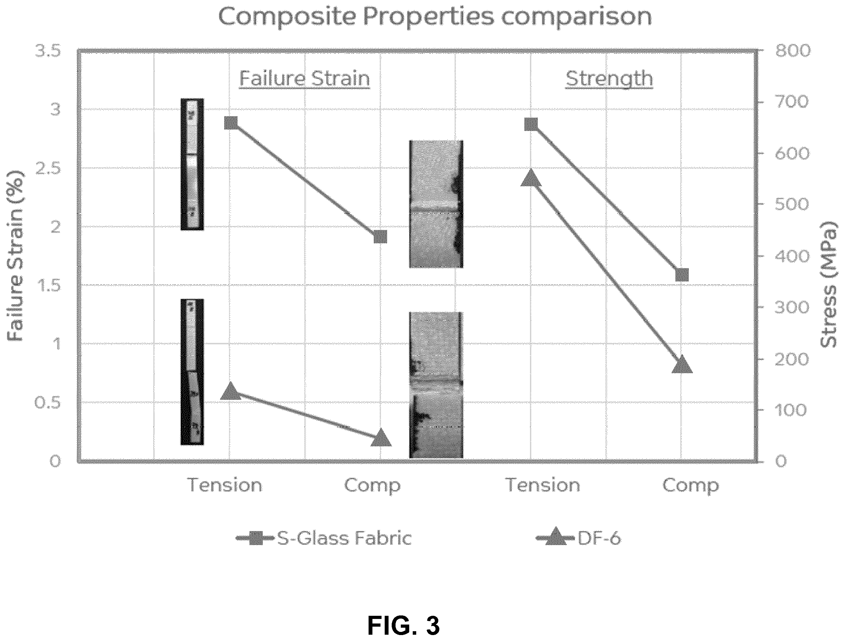

**FIG. 3** is a graph showing failure strains and strengths in tension and compression for non-hybrid laminates with fabric laminae comprising glass fibers and for non-hybrid laminates with fabric laminae comprising ceramic fibers.
**FIGs. 4A-4C** each show a stress contour of a housing corner that is defined by a non-hybrid laminate; each contour was produced from a finite element analysis simulating the stresses that the corner would experience when sustaining an impact after a 1-meter high drop. FIG. 4A shows the results for a laminate with glass fabric laminae, FIG. 4B shows the results for a laminate with ceramic fabric laminae, and FIG. 4C shows the results for a laminate with unidirectional carbon fiber laminae.
**FIG. 5** is a stress contour for a housing corner defined by a hybrid laminate including both glass fabric laminae and ceramic fabric laminae, with one of the glass fabric laminae defining the exterior surface of the corner. The FIG. 5 contour was generated using the same simulation used to generate FIGs. 4A-4C.

### DETAILED DESCRIPTION

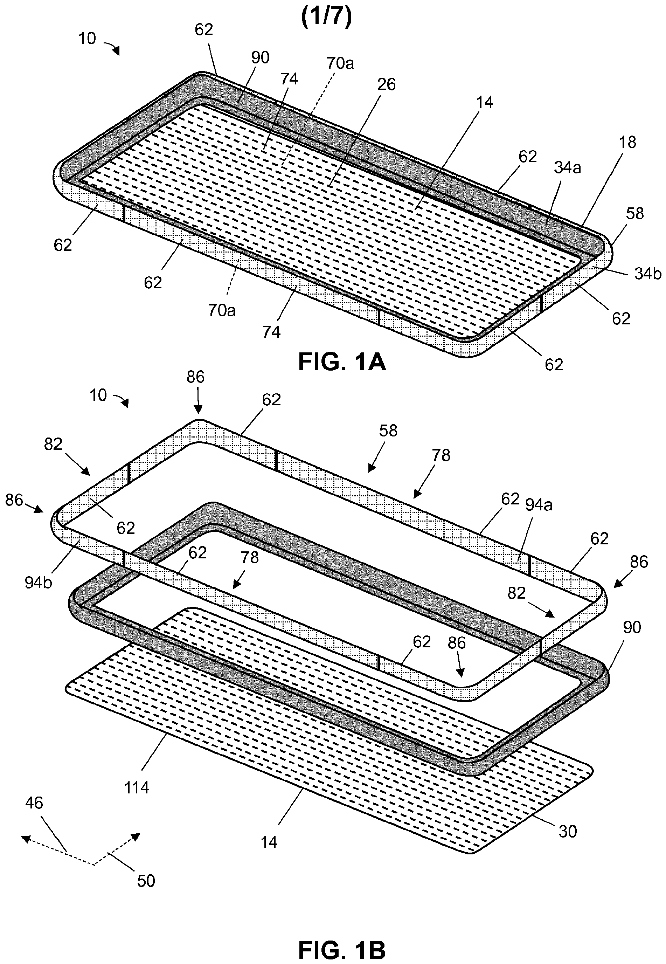

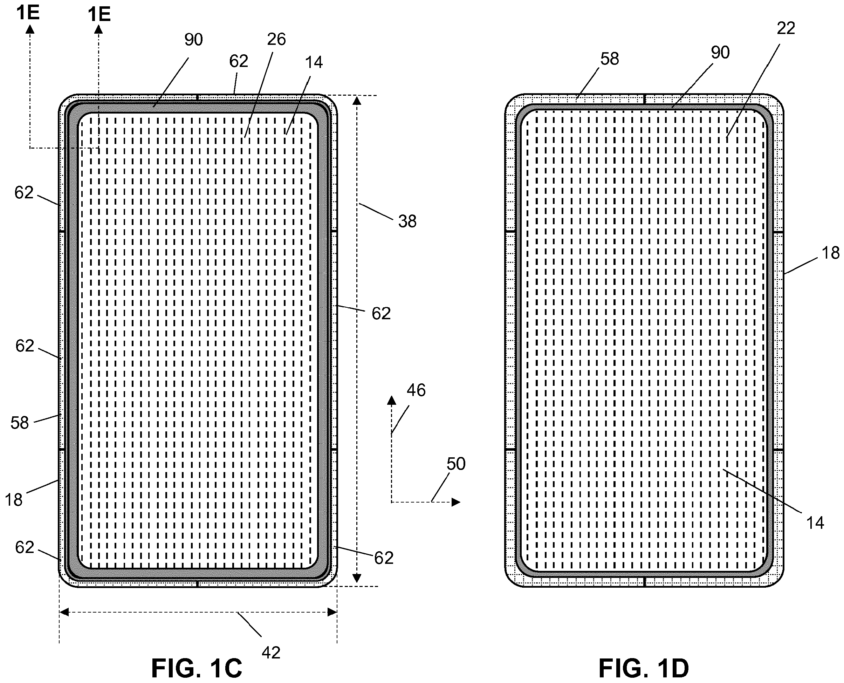

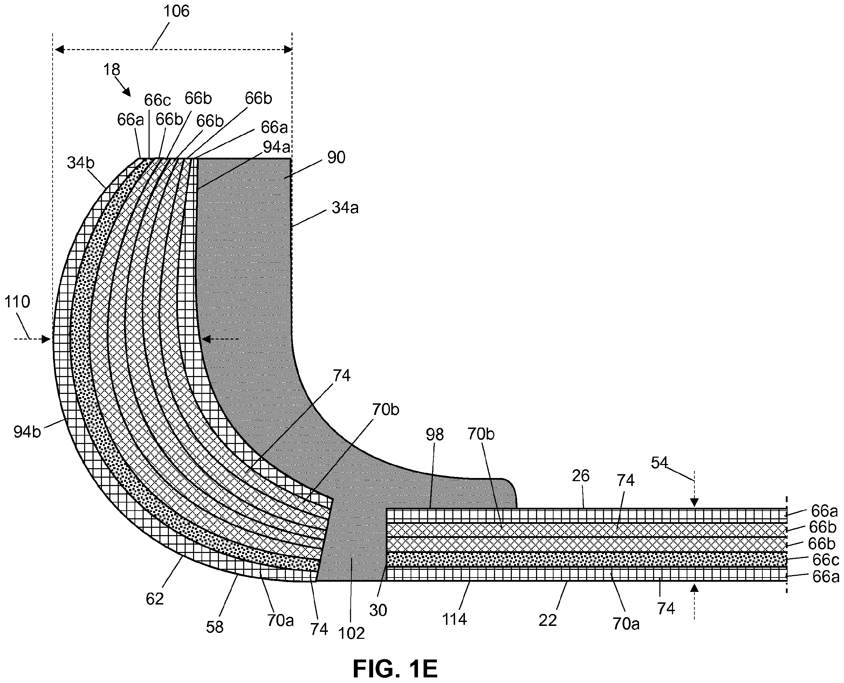

Referring to FIGs. 1A-1E, shown is a portable electronic device housing 10 that can comprise a plate 14 and a sidewall 18. Plate 14 can define opposing front and back major surfaces, 22 and 26, respectively, and an edge 30 extending between the front and back major surfaces. Sidewall 18 can be connected to plate 14 such that the sidewall surrounds at least a majority (up to and including all) of a periphery of the plate and extends away from back major surface 26 of plate 14. That sidewall 18 can be so disposed whether it contacts plate 14 on front major surface 22, back major surface 26, and/or edge 30. Sidewall 18 can define opposing interior and exterior surfaces 34a and 34b and housing 10 can define a cavity (e.g., that is faced by the interior surface of the sidewall) configured to receive electronic components of a portable electronic device, such as a logic board, processors (e.g., one or more CPUs, microcontrollers, field effect gate arrays, and/or the like), system memory, data storage devices (e.g., solid state or hard drive), speakers, wireless modems, antennas, batteries, and/or the like. Such components can be secured within housing 10 using any suitable means, such as screws, clips, rivets, and/or adhesive (e.g., a curable polymer adhesive). Thermally-conductive paste or grease can be disposed between an electronic component and housing 10. A cover (e.g., a clear glass or polymeric cover through which an electronic display of the portable electronic device can be viewed) can be attached to housing 10 to enclose the cavity (e.g., with fasteners such as screws, clips, or rivets, or with an adhesive such as a curable polymer adhesive) with electronic components disposed in the cavity.

Housing 10 can have any suitable shape and size to promote ergonomics and to protect electronic components that are received therein. For example, housing 10 can have a maximum length 38, measured in a first direction 46, and a maximum width 42, measured in a second direction 50 that is perpendicular to the first direction, that is less than or equal to any one of, or between any two of: 90%, 80%, 70%, 60%, 50%, or 40% of the maximum length. A minimum thickness 54 of plate 14, measured between front and back major surfaces 22 and 26, can be greater than or equal to any one of, or between any two of: 0.50, 0.75, 1.00, 1.25, 1.50, 1.75, 2.00, 2.25, or 2.50 mm (e.g., between 0.50 and 2.50 mm or between 0.80 and 1.40 mm). Such a thickness can promote stiffness and impact resistance.

Sidewall 18 can comprise one or more materials selected to achieve a suitable impact resistance, stiffness, and, optionally, RF transparency. As shown, sidewall 18 includes a rim 58-which can be disposed along at least a majority (up to and including all) of the periphery of plate 14-that comprises one or more laminates 62, each including two or more laminae (e.g., 66a-66c), such as greater than or equal to any one of, or between any two of: 2, 3, 4, 5, 6, 7, 8, 9, or 10 laminae. The laminae of each of laminate(s) 62 can include fiber-reinforced laminae 66a and 66b, each comprising fibers (e.g., 70a and 70b) (e.g., continuous fibers) dispersed within a polymeric matrix material (e.g., 74). The fibers of each of those fiber-reinforced laminae 66a and 66b can be arranged in any suitable manner; for example, each of the fiber-reinforced laminae can comprise a unidirectional lamina (e.g., in which substantially all of the lamina's fibers are aligned) or a lamina comprising a fabric in which the fibers define a woven structure (e.g., as in a lamina having a plane, twill, stain, basket, leno, mock leno, or the like weave) (e.g., such that none of the first and second laminae is a nonwoven lamina). These arrangements of continuous fibers can promote higher strength for sidewall 18 than laminae including discontinuous or chopped fibers. In some embodiments, however, at least one of laminae 66a and 66b can comprise discontinuous or chopped fibers. Each of laminae 66a and 66b can have a pre-consolidation fiber volume fraction that is greater than or equal to any one of, or between any two of: 10, 20, 30, 40, 50, or 60 (e.g., between 35 and 60% or between 45 and 60%).

The fibers of each of fiber-reinforced laminae 66a and 66b can include any suitable fibers, such as glass fibers, ceramic fibers, carbon fibers, aramid fibers, polyethylene fibers, polyester fibers, polyamide fibers, basalt fibers, steel fibers, and/or the like. Illustrative glass fibers that can provide a suitable combination of impact resistance and RF transparency can include E-glass (e.g., alumino-lime silicate having less than 1%, by weight, alkali oxides) or S-glass (e.g., alumino silicate glass substantially free of calcium oxide). Other suitable glass fibers can include A-glass (e.g., alkali-lime glass substantially free of boron oxide), C-glass (e.g., alkali-lime glass with comparatively high boron oxide content), D-glass (e.g., borosilicate glass), R-glass (e.g., alumino silicate glass substantially free of magnesium oxide and calcium oxide), or E-glass derivatives that are fluorine-free and/or boron-free. Illustrative ceramic fibers that can provide a suitable combination of stiffness and RF transparency can include, for example, fibers comprising aluminum oxide. Other suitable ceramic fibers can include fibers comprising silicon carbide, silicon oxide, zirconium oxide, calcium oxide, magnesium oxide, aluminum silicate, calcium sulfate hemihydrate, boron oxide, boron carbide, or combinations thereof.

For laminates including a single type of fibers, some fiber types (e.g., ceramic fibers or carbon fibers) may yield a relatively stiff but brittle laminate while other fiber types (e.g., glass fibers) may yield a comparatively less-stiff but impact-resistant laminate. Each of laminate(s) 62 can be a hybrid laminate-meaning that laminae 66a and 66b can include different fiber types-whose laminae are arranged to yield a better combination of stiffness and impact resistance than if the laminate incorporated a single type of fibers. For example, the fiber-reinforced laminae of laminate 62 can include one or more first laminae 66a whose fibers include fibers 70a of a first type (e.g., such that at least 90% of the first lamina's fibers are the fibers of the first type) and one or more second laminae 66b whose fibers include fibers 70b of a second type that is distinct from the first type (e.g., such that at least 90% of the second lamina's fibers are the fibers of the second type). Laminate 62 can include any number of first and second laminae 66a and 66b to achieve a suitable stiffness and impact resistance, such as greater than or equal to any one of or between any two of 1, 2, 3, 4, 5, or 6 first laminae and greater than or equal to any one of, or between any two of, 1, 2, 3, 4, 5, or 6 second laminae.

Fibers 70a of the first type can be relatively impact-resistant compared to fibers 70b of the second type. For example, fibers 70a can have an elongation at break (also known as fracture strain) that is at least 10%, 50%, 100%, 150%, 200%, 300%, 400%, 500%, 600%, or 1,000% larger than an elongation at break of fibers 70b. Fibers 70b can be relatively stiff compared to fibers 70a, e.g., a tensile modulus of fibers 70b can be at least 10%, 50%, 100%, 150%, 200%, 250%, 300%, 350%, or 400% larger than a tensile modulus of fibers 70a. To illustrate, fibers 70a can have an elongation at break that is greater than or equal to any one of, or between any two of, 2.3%, 2.8%, 3.3%, 3.8%, 4.3%, 4.8%, 5.3%, 5.8%, or 6.3% (e.g., greater than or equal to 4.0%) and a tensile modulus that is less than or equal to any one of, or between any two of, 125, 120, 115, 110, 105, 100, 95, 90, 85, 80, 75, 70, 65, 60, 55, 50, 45, 40, 35, or 30 gigapascals (GPa) (e.g., less than or equal to 95 GPa) and fibers 70b can have an elongation at break that is less than or equal to any one of, or between any two of, 2.2%, 2.0%, 1.8%, 1.6%, 1.4%, 1.2%, 1.0%, or 0.8% (e.g., less than or equal to 1.5%) and a tensile modulus that is greater than or equal to any one of, or between any two of, 130, 160, 190, 220, 250, 280, 310, 340, 370, 400, 430, 460, 490, or 520 GPa (e.g., greater than or equal to 180 GPa). For example, fibers 70a can comprise glass fibers (e.g., S-glass fibers) and fibers 70b can comprise ceramic fibers and/or carbon fibers. Elongation at break and tensile modulus can be measured according to the procedure described in ASTM C1557-14, *Standard Test Method for Tensile Strength and Young's Modulus of Fibers,* which is hereby incorporated by reference.

In some instances, fibers 70a of the first type can also be relatively tough compared to fibers 70b of the second type, e.g., a modulus of toughness of fibers 70a can be at least 10%, 50%, 100%, 150%, 200%, 300%, 400%, 500%, 600%, or 1,000% larger than a modulus of toughness of fibers 70b. For example, fibers 70a can have a modulus of toughness that is greater than or equal to any one of, or between any two of 100, 120, 140, 160, 180, or 200 megajoules per cubic meter (MJ/m³) (e.g., greater than or equal to 110 MJ/m³) and fibers 70b can have a modulus of toughness that is less than or equal to any one of, or between any two of, 90, 80, 70, 60, 50, 40, 30, 20, 10, or 5 MJ/m³ (e.g., less than or equal to 80 MJ/m³). Modulus of toughness is the amount of energy that a material can absorb per unit volume before it fractures; it can be calculated as the area under the material's stress-strain curve-which, for fibers, can be determined according to ASTM C1557-14-up to the fracture point.

For each of laminate(s) 62, at least one of first lamina(e) 66a can be disposed closer to exterior surface 34b of sidewall 18 than is each of second lamina(e) 66b, optionally such that one of the first lamina(e) defines a portion of the exterior surface. In this manner, that exterior first lamina 66a-with its relatively impact-resistant fibers 70a-can provide protection for second lamina(e) 66b when exterior surface 34b sustains an impact. This arrangement of laminae 66a and 66b can mitigate damage to laminate 62 (and thus to sidewall 18) that might otherwise occur if one of the second lamina(e)-with its relatively brittle fibers 70b-sustained an impact directly. Likewise, when laminate 62 includes two or more first laminae 66a, second lamina(e) 66b can be disposed between two of the first laminae (e.g., two of the first laminae that define a portion of interior and exterior surfaces 34a and 34b, as shown) to provide protection against impacts sustained by interior surface 34a as well (e.g., impacts that may occur during assembly of the portable electronic device). Second lamina(e) 66b, with their relatively stiff fibers, can render laminate 62, and thus sidewall 18, relatively stiff to mitigate bending of housing 10. When laminate 62 includes multiple second laminae 66b, each of the second laminae can, but need not, be in contact with at least one other of the second laminae.

Matrix material 74 of each of laminae 66a and 66b can comprise, for example, a thermoplastic and/or thermoset material. A suitable thermoplastic material can include polycarbonate (PC), polybutylene terephthalate (PBT), or a combination thereof. A laminate 62 can have improved crack resistance and impact resistance when the matrix material of at least some of its laminae comprises a PBT/PC blend, compared to PC or PBT alone. PBT/PC matrix materials can be cost-effective and can provide a suitable fire resistance and color-neutrality for portable electronic device applications. For example, a PBT/PC matrix material can satisfy the UL 94 V-2 flammability standard, as described in UL 94 - Standard for Tests for Flammability of Plastic Materials for Parts in Devices and Appliances by UL Standards (6th ed., March 34, 2013), which is hereby incorporated by reference.

Suitable PCs-whether or not included in a PBT/PC blend-may be sustainable. Such a PC can be, for example, post-consumer or post-industrial recycled PC. Further, such a PC can be bio-sourced; to illustrate, the PC can be synthesized using bio-sourced monomers or pre-monomer chemical compounds (e.g., bio-benzene, bio-phenol, and/or the like). So too, may suitable PBTs be sustainable. For example, a suitable PBT may be one synthesized using monomers (e.g., terephthalic acid) recovered by chemically decomposing recycled polyethylene terephthalate, such as that from bottles (e.g., VALOX iQ™ resin, commercially available from SABIC). Sustainable PCs and/or sustainable PBTs can be included in a blend; an example of such a blend is a XENOY iQ™ resin, commercially available from SABIC.

In other embodiments the matrix material of each of laminae 66a and 66b can comprise any suitable thermoplastic and/or thermoset composition. Other suitable thermoplastic matrix materials include, for example, polyethylene terephthalate, poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof (including blends with PC and/or PBT). Suitable thermoset matrix materials include, for example, an unsaturated polyester resin, a polyurethane, bakelite, duroplast, urea-formaldehyde, diallylphthalate, epoxy resin, an epoxy vinylester, a polyimide, a cyanate ester of a polycyanurate, dicyclopentadiene, a phenolic, a benzoxazine, a co-polymer thereof, or a blend thereof.

Each of laminate(s) 62 can also include one or more third laminae 66c that can further promote sidewall 18's impact resistance. Each of third lamina(e) 66c can be resilient (e.g., less stiff than each of first and second laminae 66a and 66b). For example, a tensile modulus of each of third lamina(e) 66c can be less than or equal to any one of, or between any two of, 1.00, 0.90, 0.80, 0.70, 0.60, 0.50, 0.40, 0.30, 0.20, 0.10, 0.09, 0.08, 0.07, 0.06, 0.05, 0.04, 0.03. 0.02, or 0.01 GPa (e.g., less than or equal to 1.00 GPa or less than or equal to 0.10 GPa). To illustrate, each of third lamina(e) 66c can comprise an elastomer-such as a rubber- and/or can comprise a foam (e.g., a closed-cell or open-cell foam, which can comprise an elastomer) or a nonwoven. At least one of third lamina(e) 66c can be disposed between and in contact with one of first lamina(e) 66a and one of second lamina(e) 66b (e.g., such that the third lamina is disposed closer to exterior surface 34b that is each of the second lamina(e)). As positioned, such a third lamina 66c can facilitate a uniform force distribution over a second lamina 66b in contact with the third lamina when sidewall 18 sustains an impact, thereby mitigating damage to the sidewall.

Rim 58 can comprise a single piece (e.g., that is a laminate 62) or two or more pieces (e.g., at least one of which is a laminate 62) that are coupled together. Laminate(s) 62 can make up any portion (up to and including all) of rim 58-optionally such that the laminate(s) are disposed along at least a majority (up to and including all) of plate 14's periphery-for sidewall 18 to provide a suitable impact resistance and stiffness for housing 10. For example, rim 58 can include two lengthwise (e.g., linear) portions 78 extending in first direction 46, two widthwise (e.g., linear) portions 82 extending in second direction 50, and four corner portions 86 that each connects one of the lengthwise portions to one of the widthwise portions (e.g., such that the rim defines a rectangular shape that can have rounded corners). Each of laminate(s) 62 can define at least one of corner portions 86-which may regularly sustain impacts during use of a portable electronic device-and, optionally, at least a section of at least one of lengthwise portions 78 and/or at least a section of at least one of widthwise portions 82. As shown, rim 58 includes multiple pieces, each of which is a laminate 62 such that the laminates define all portions of the rim and are disposed along all of plate 14's periphery; the pieces can be joined at locations spaced apart from corner portions 86 to promote rim strength. In this manner, substantially all of rim 58 can have the improved combination of impact resistance and stiffness of laminates 62 as described above. In other embodiments that include a multi-piece rim, however, at least one of the rim's pieces can comprise a material other than a hybrid laminate 62, such as a metal (e.g., aluminum) or a non-hybrid laminate (e.g., a laminate having fibers of the same type). For example, at least a section of each of lengthwise portions 78-which may not sustain impacts as often as corner portions 86 during use of the portable electronic device-can be defined by a non-hybrid laminate whose laminae include stiff fibers (e.g., carbon fibers) such that that portion of rim 58 is relatively stiff, albeit having less impact resistance than portions defined by laminate(s) 62.

Rim 58 can be connected to plate 14 in any suitable manner, such as via an adhesive, a snap-fit, and/or overmolding. As shown, sidewall 18 can comprise one or more polymeric connecting members 90 that connect rim 58 to plate 14. Rim 58 can have opposing interior and exterior surfaces 94a and 94b (e.g., with the rim's exterior surface defining exterior surface 34b of sidewall 18) and connecting member(s) 90 can be disposed on the rim's interior surface (e.g., such that the connecting member(s) define interior surface 34a of sidewall 18); in other embodiments, however, the connecting member can be disposed on the rim's exterior surface. To connect rim 58 to plate 14, connecting member(s) 90 can be in contact with front major surface 22, back major surface 26, and/or edge 30 of the plate. Connecting member(s) 90 can extend away from back major surface 26 and be disposed along at least a majority (up to and including all) of plate 14's periphery.

Connecting member(s) 90 can comprise any material suitable for transferring loads between rim 58 and plate 14 to reduce the risk of damage to housing 10. For example, each of connecting member(s) 90 can comprise any of the above-described matrix materials and can, but need not, include discontinuous or chopped fibers (e.g., any of those described above) dispersed in the matrix material such that the connecting member comprises a polymer-fiber blend. The polymer-fiber blend can have a fiber volume fraction that is greater than or equal to any one of, or between any two of: 10, 20, 30, 40, 50, 60, or 70 (e.g., between 20 and 50% or between 40 and 50%) and a fiber weight fraction that is greater than or equal to any one of, or between any two of: 10, 20, 30, 40, 50, 60, or 70 (e.g., between 40 and 80% or between 60 and 80%). Increasing the fiber volume fraction and/or fiber weight fraction can increase the tensile modulus and/or tensile strength of the polymer-fiber blend. To promote bonding between connecting member(s) 90 and rim 58, the matrix material of the connecting member(s) can be the same as that of laminate(s) 62. For example, each of connecting member(s) 90 can comprise a PBT/PC matrix material, with or without discontinuous fibers dispersed therein.

The geometry of rim 58 and connecting member(s) 90 can also facilitate load transfer and bonding. For example, each of connecting member(s) 90 can define a recess 98 that receives plate 14 such that a portion 102 of the connecting member is coplanar with the plate and is disposed between the plate and the rim 58. Coplanar portion 102 of each of connecting member(s) 90 can promote bonding and absorb loads during an impact to mitigate damage to the rim 58. Interior surface 94a of rim 58 can also define one or more recessed channels in which a portion of each of connecting member(s) 90 is received and/or can define one or more protrusions to increase the bonding area between the connecting member and the rim.

To promote aesthetics, ergonomics, impact resistance, and stiffness, a thickness 106 of sidewall 18, measured between interior and exterior surface 34a and 34b, can be greater than or equal to any one of, or between any two of, 2.5, 2.7, 2.9, 3.1, 3.3, 3.5, 3.7, 3.9, or 4.1 mm, with a thickness 110 of rim 54, measured between interior and exterior surfaces 94a and 94b, being greater than or equal to any one of, or between any two of, 0.6, 0.8, 1.0, 1.5, 2.0, 2.5, 3.0, 3.5, or 3.7 mm (e.g., between 1.8 and 2.6 mm).

Plate 14 can comprise glass, a metal (e.g., aluminum), and/or a composite (e.g., a laminate or a polymer-fiber blend including discontinuous or chopped fibers dispersed in a polymeric matrix material). As shown, plate 14 comprises a hybrid laminate 114 that can have any of the laminae described above, such as one or more first laminae 66a and one or more second laminae 66b (with any of their fibers 70a and 70b and matrix materials 74). Similar to the laminae of laminate(s) 62, the laminae of laminate 114 can be arranged to achieve a better combination of impact resistance and stiffness than non-hybrid laminates. For example, at least one of laminate 114's first lamina(e) 66a can be disposed closer to front major surface 22 than is each of the laminate's second lamina(e) 66b, optionally such that that first lamina defines the front major surface. When laminate 114 includes two or more first laminae 66a, the laminate's second lamina(e) 66b can be disposed between two of the first laminae. In this manner, laminate 114's first lamina(e) 66a-with their relatively impact-resistant fibers 70a, such as glass fibers-can provide protection for second lamina(e) 66b with their relatively stiff but brittle fibers 70b, such as ceramic fibers and/or carbon fibers-as described above with reference to laminate(s) 62. Laminate 114 can also include one or more resilient third laminae 66c (e.g., that each comprises an elastomer and/or comprises a foam or nonwoven), at least one of which can be disposed between and in contact with one of the laminate's first lamina(e) 66a and one of the laminate's second lamina(e) 66b (e.g., such that the third lamina is disposed closer to front major surface 22 than the second lamina it contacts). As with third lamina(e) 66c of a laminate 62, such a third lamina of laminate 114 can facilitate a uniform force distribution over a second lamina 66b in contact with the third lamina when plate 14 sustains an impact. In other embodiments, plate 14 can comprise a non-hybrid laminate (e.g., comprising a single type of fibers). Whether or not plate 14 includes a laminate 114, the plate can comprise a polymeric layer that can be integral with connecting member(s) 90. If plate 14 includes a laminate (e.g., 114), that laminate can be unitary with one or more of the laminate(s) (e.g., 62) of rim 58.

Plate 14 can also, but need not, include one or more layers to promote the aesthetics of housing 10. For example, plate 14 can include a translucent layer that defines at least a majority (up to and including all of) front major surface 22 and comprises glass, polycarbonate, an acrylate polymer (e.g., poly(methyl methacrylate)), polyethylene terephthalate, polyimide, polyethersulfone, polyethylene naphthalate, polyarylate, and/or the like. Plate 14 can also include a masking layer, such as a colored film (e.g., that is attached to and disposed between laminate 114 and a translucent layer) to obscure, for example, laminate 114 from view.

At least a portion, optionally all, of plate 14 can be RF transparent (e.g., to facilitate wireless charging through the plate and/or permit wireless transmissions therethrough). For example, when plate 14 includes a fiber-reinforced composite (e.g., a laminate or polymer-fiber blend), the fibers of the composite can be selected such that the composite has a dielectric constant, at 10 GHz, that is greater than or equal to any one of, or between any two of: 4.0, 4.5, 5.0, or 5.5 (e.g., between 4.0 and 5.5). To illustrate, for laminate 114 fibers 70a of each of first lamina(e) 66a can comprise glass fibers and fibers 70b of each of second lamina(e) 66b can comprise ceramics fibers.

TABLES 1 and 2 set forth mechanical characteristics of illustrative polymer-fiber blends and laminae, respectively, that are suitable for use in some of the present housings (e.g., for laminate(s) 62 and 114 and/or connecting member(s) 90).

**TABLE 1: Mechanical Properties of Illustrative Polymer-Fiber Blends**

| **Fiber Loading** | Low | Medium | High |
|---|---|---|---|
| **Fiber Type** | Ceramic (NEXTEL 610) | Ceramic (NEXTEL 610) | Ceramic (NEXTEL 610) |
| **Fiber Volume Fraction (%)** | 25 | 33 | 43 |
| **Fiber Weight Fraction (%)** | 50 | 60 | 70 |
| **Tensile Modulus (GPa)** | 26 | 31 | 36 |
| **Tensile Strength (MPa)** | 120 | 115 | 93 |
| **Tensile Elongation at Break (%)** | 1.7 | 1.7 | 1.5 |
| **Flexure Modulus (GPa)** | 20 | 23 | 27 |
| **Flexure Strength (MPa)** | 185 | 181 | 146 |

**TABLE 2: Mechanical Properties of Illustrative Laminae**

| | **Unidirectional Tape** | | | **Fabric** | |
|---|---|---|---|---|---|
| **Fiber Type** | S-Glass | Ceramic (NEXTEL 610) | Carbon Fiber | S-Glass | Ceramic (NEXTEL DF6) |
| **Fiber Tensile Modulus (GPa)** | 90 | 370 | 420 | - | - |
| **Fiber Volume Fraction (%)** | 47-51 | 36-38 | 46-50 | 53-58 | 50-53 |
| **Tensile Modulus (GPa)** | 37-40 | 135-145 | 180-190 | 30-32 | 100-110 |
| **Tensile Strength (MPa)** | 900-950 | 600-650 | 1200-1600 | 650-700 | 550-580 |
| **Tensile Elongation at break (%)** | 1.9-2.1 | 0.3-0.4 | 0.6-0.7 | 2.5-3 | 0.4-0.6 |

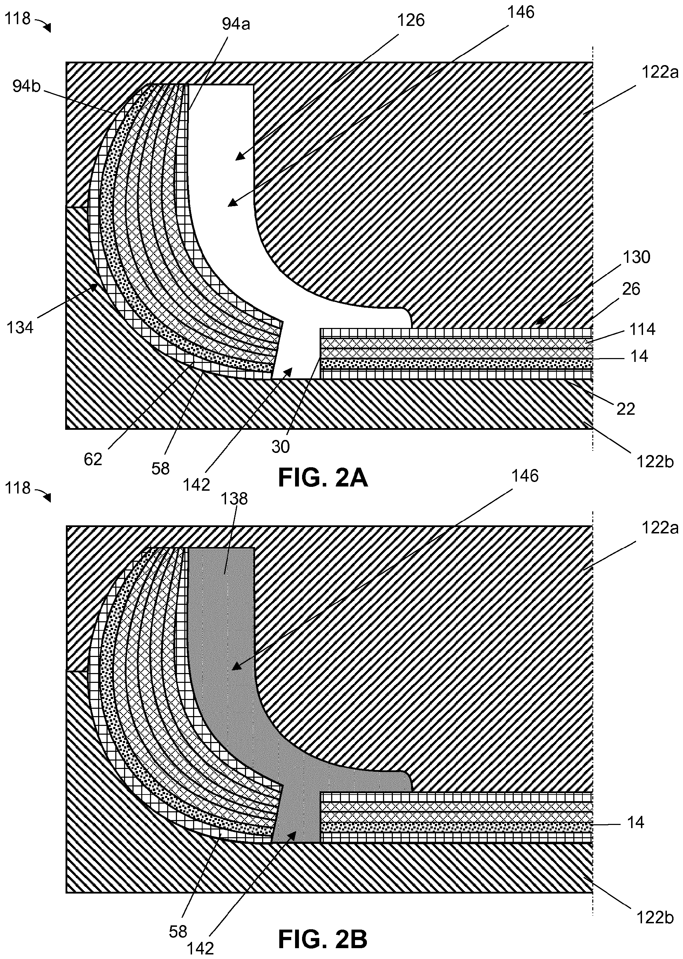

Referring to FIGs. 2A and 2B, some of the present housings (e.g., 10) can be manufactured via injection molding. Manufacturing can be performed using a mold (e.g., 118) comprising two or more mold portions (e.g., 122a and 122b) that are movable between an open position and a closed position in which the mold portions cooperate to define a mold cavity (e.g., 126). Molding surfaces of the mold portions can be shaped such that the mold cavity comprises a planar cavity portion (e.g., 130) and a peripheral channel (e.g., 134) that extends away from and is disposed along at least a majority (up to and including all) of a periphery of the planar cavity portion. The planar cavity portion can be configured to receive a plate (e.g., any of those described above, such one comprising laminate 114) and/or form at least a portion of a plate.

To form the housing, some methods comprise a step of disposing a rim (e.g., 58) (e.g., comprising one or more hybrid laminate(s) 62, as described above) within the mold (e.g., such that the rim is received in the peripheral channel) (FIG. 2A). A polymeric material (e.g., 138) (e.g., comprising any of the above-described matrix materials, such as PC and/or PBT) that can comprise or be free of fibers (e.g., in any of the proportions described above with reference to connecting member(s) 90) can be injected into the mold (FIG. 2B) and set to form one or more polymeric connecting members (e.g., 90) that are connected to the plate such that the connecting member(s) extend away from the plate's back major surface (e.g., 26) and are disposed along at least a majority of the plate's periphery. The rim and resulting connecting member(s) can define a sidewall (e.g., 18) that extends away from of the back major surface of the plate and is disposed along at least a majority of the plate's periphery. At least a portion of the connecting member(s) can be disposed on the back major surface and/or edge (e.g., 30) of the plate; in some instances, the connecting member(s) can be formed such that they contact the front major surface (e.g., 22), whether or not they contact the back major surface and/or edge.

The rim can be treated and/or can define one or more features to facilitate bonding between the rim and the connecting member(s). For example, an adhesive can be applied to the interior surface (e.g., 94a) of the rim and/or the interior surface can be etched (e.g., mechanically and/or chemically), laser engraved, plasma treated, and/or the like prior to the injecting. To increase the bonding area between the connecting member(s) and the rim as described above, the rim's interior surface can also define one or more recessed channels that can receive the injected polymeric material and/or can define one or more protrusions.

As shown, the rim and plate-which comprises a laminate 114 are manufactured prior to the injection molding. The laminates of the rim and plate can be formed using a variety of techniques, including but not limited to bladder molding of pre-preg sheets, compression molding of pre-preg sheets, autoclave or vacuum bag molding of prepreg sheets, mandrel molding, wet layup molding of neat sheets, filament winding molding in which fiber bundles are pulled through a wet bath resin and wound over a mandrel, pultrusion or extrusion molding in which fibers saturated with wet resin are pulled or extruded through a die, or resin transfer molding and vacuum assisted resin transfer molding in which fabrics are placed into a mold and injected with fluid resin under pressure.

The rim and the plate can be positioned such that a portion (e.g., 142) of the volume in the peripheral channel is coplanar with the plate and is defined between the rim and the plate. The polymeric material can enter the coplanar volume during injecting such that each of the formed connecting member(s) defines a recess that receives the plate and comprises a portion (e.g., 102) that is coplanar with the plate and is disposed between the plate and the rim. As described above, this can increase the bonding area and can facilitate load absorption.

The pre-manufactured plate can, but need not, occupy all of a volume defined by the planar cavity portion such that the injected polymeric material enters a volume (e.g., 146) that is defined by at least a portion of the molding surfaces, the plate, and the rim and is constrained to the peripheral channel. In other embodiments, however, at least a portion of the volume defined by the planar cavity portion can be unoccupied during the injection molding such that the polymeric material can enter that volume and form at least a portion of the plate. For example, some methods comprise disposing one or more layers (e.g., a laminate, a translucent layer, and/or a masking layer) in the mold that occupy less than all of the planar cavity portion's volume and injecting the polymeric material such that the polymeric material defines a polymeric layer that, with the other layer(s) disposed in the mold, define the housing's plate. Alternatively, layer(s) need not be disposed in the planar cavity portion such that the injected polymeric material forms and defines the entirety of the plate. In embodiments in which the injected polymeric material defines both the connecting member(s) and at least a portion of the plate, that portion of the plate can be integral with the connecting member(s).

In some methods, the plate need not be disposed in the mold or formed during injection molding. In such methods, the molding surfaces of the mold portions can be shaped such that the resulting sidewall-with its rim and connecting member(s) has substantially the same shape as described above. The sidewall can be removed from the mold and the plate can thereafter be secured to the sidewall (e.g., via an adhesive and/or a snap-fit) to make the housing.

### EXAMPLES

The present invention will be described in greater detail by way of specific examples. The following examples are offered for illustrative purposes only and are not intended to limit the invention in any manner. Those of skill in the art will readily recognized a variety of noncritical parameters that can be changed or modified to yield essentially the same results.

### Example 1

Different types of non-hybrid laminates were tested to determine, for each of the laminate types, the strains at which the laminate would fail in tension and compression and the tensile and compressive strengths of the laminate. The first type of laminates tested (upper two images in the figure) used S-2® glass fiber fabric pre-pregs for their laminae; those pre-pregs had a tensile modulus that was between 30 and 32 GPa. The second type of laminates tested (lower two images in the figure) used NEXTEL™ DF6 ceramic fiber fabric pre-pregs for their laminae; those pre-pregs had a tensile modulus that was between 100 and 110 GPa.

For the first type of laminates that used glass fiber pre-pregs, the failure strain was almost 3% in tension and almost 2% in compression, and the laminate strength was above 650 MPa in tension and above 350 MPa in compression. For the second type of laminates that used ceramic fiber pre-pregs, the failure strain was slightly above 0.5% in tension and near 0.25% in compression.

### Example 2

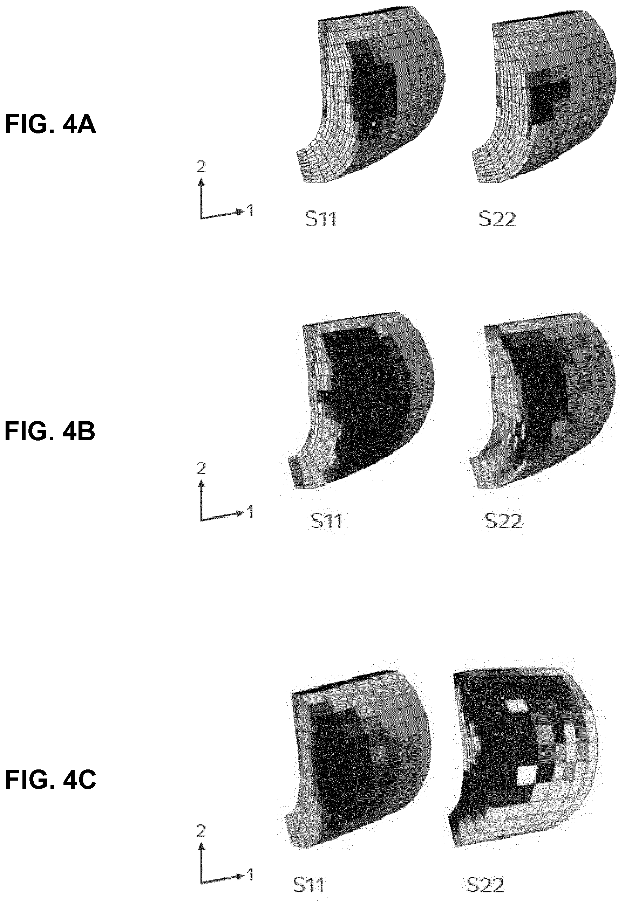

Referring to FIGs. 4A-4C, a finite element analysis was performed to assess the ability of a non-hybrid laminate that defines a corner of a housing to resist damage when sustaining an impact. Three different laminates were modelled: a laminate with fabric laminae comprising S-glass fibers (FIG. 4A) ("Laminate 1"), a laminate with fabric laminae comprising ceramic fibers (FIG. 4B) ("Laminate 2"), and a laminate with unidirectional laminae comprising carbon fibers (FIG. 4C) ("Laminate 3"). TABLE 3 sets forth the tensile and compression strengths of each of the modelled laminates in the longitudinal and transverse directions (directions 1 and 2, respectively).

**TABLE 3: Tensile and Compression Strengths of Modelled Example 2 Laminates**

| | | **Laminate 1** | **Laminate 2** | **Laminate 3** |
|---|---|---|---|---|
| **Tensile Strength** | **Direction 1** | 600 MPa | 475 MPa | 1300 MPa |
| | **Direction 2** | 600 MPa | 475 MPa | 30 MPa |
| **Compression Strength** | **Direction 1** | 700 MPa | 300 MPa | 700 MPa |
| | **Direction 2** | 700 MPa | 300 MPa | 60 MPa |

For each of the laminates, stresses in directions 1 and 2 were modelled based on an impact sustained by the corner during a simulated 1-meter drop. The stresses were represented as stress contours (FIGs. 4A-4C), with an element in black indicating that the modelled laminate would sustain damage at the black element under the simulated fall. The model indicated that Laminate 1-with its glass fibers-would sustain the least amount of damage while Laminates 2 and 3-with their brittle ceramic and carbon fibers, respectively-would sustain a relatively large amount of damage. Because Laminate 3 included unidirectional laminae, the model indicated that that laminate may experience transverse splitting.

### Example 3

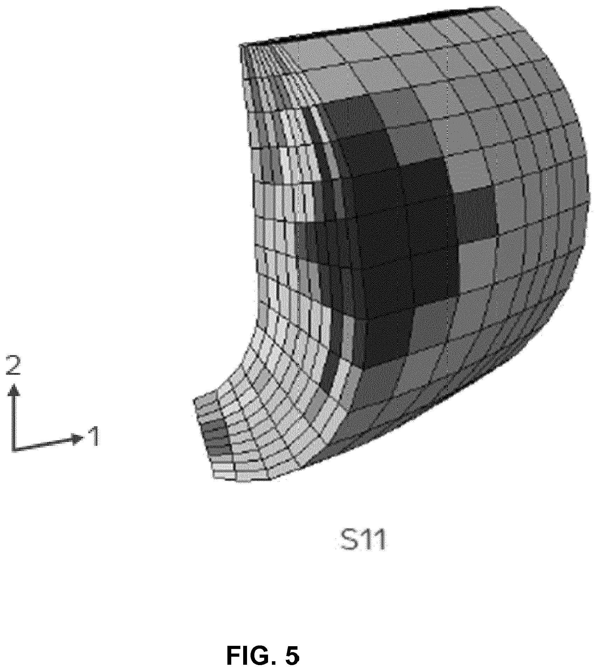

Referring to FIG. 5, the analysis of Example 2 was performed for a modelled hybrid laminate comprising first laminae that each had woven glass fibers and second laminae that each had woven ceramic fibers. The second laminae were modeled to be disposed between the first laminae such that one of the first laminae defined the exterior surface of the corner that was simulated to sustain an impact. The modelled hybrid laminate was stiffer than Laminate 1 of Example 2 but not as stiff as Laminates 2 and 3. However, under the simulation the area of the hybrid laminate that sustained damage was relatively small: the area was less than that modelled to occur for Laminates 2 and 3 and similar to that modelled to occur for Laminate 1.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A portable electronic device housing comprising:
a plate defining:
a front major surface;
a back major surface opposite the front major surface, and
a periphery; and
a sidewall coupled to the plate with the sidewall disposed along at least a majority of the periphery of the plate and extending away from the back major surface of the plate in a direction opposite the front major surface of the plate, the sidewall:
defining opposing interior and exterior surfaces; and
including a rim that comprises one or more laminates, each comprising one or more first laminae and one or more second laminae that each includes fibers dispersed within a polymeric matrix material, wherein:
the fibers of each of the first lamina(e) include glass fibers;
the fibers of each of the second lamina(e) include ceramic fibers and/or carbon fibers dispersed within a polymeric matrix material; and
at least one of the first lamina(e) is disposed closer to the exterior surface of the sidewall than is each of the second lamina(e).

2. The housing of claim 1, wherein:
at least 90% of the fibers of each of the first lamina(e) are the glass fibers; and
at least 90% of the fibers of each of the second lamina(e) are the ceramic fibers and/or carbon fibers.

3. A portable electronic device housing comprising:
a plate defining:
a front major surface;
a back major surface opposite the front major surface, and
a periphery; and
a sidewall coupled to the plate with the sidewall disposed along at least a majority of the periphery of the plate and extending away from the back major surface of the plate in a direction opposite the front major surface of the plate, the sidewall:
defining opposing interior and exterior surfaces; and
comprising one or more laminates, each comprising one or more first laminae and one or more second laminae that each includes fibers dispersed within a polymeric matrix material, wherein:
the fibers of each of the first lamina(e) include fibers of a first type and the fibers of each of the second lamina(e) include fibers of a second type that is distinct from the first type;
the fibers of the first type have an elongation at failure that is at least 10% higher than an elongation at failure of the fibers of the second type;
the fibers of the second type have a tensile modulus that is at least 10% higher than a tensile modulus of the fibers of the first type; and
at least one of the first lamina(e) is disposed closer to the exterior surface of the sidewall than is each of the second lamina(e).

4. The housing of claim 3, wherein:
at least 90% of the fibers of each of the first lamina(e) are the fibers of the first type; and
at least 90% of the fibers of each of the second lamina(e) are the fibers of the second type.

5. The housing of any of claims 1-4, wherein for each of the laminate(s):
the one or more first laminae comprise two or more first laminae; and
the second lamina(e) are disposed between two of the first laminae.

6. The housing of any of claims 1-5, wherein one of the first lamina(e) of each of the laminate(s) defines at least a portion of the exterior surface of the sidewall.

7. The housing of any of claims 1-6, wherein for each of the laminate(s), for each of the first and second laminae:
the lamina is a unidirectional lamina; or
the fibers of the lamina define a woven structure.

8. The housing of any of claims 1-7 wherein each of the laminate(s) comprises one or more third laminae, wherein:
each of the third lamina(e) is resilient; and
at least one of the third laminae is disposed between and in contact with one of the first lamina(e) and one of the second lamina(e).

9. The housing of claim 8, wherein each of the third lamina(e) of each of the laminate(s) comprises an elastomer and/or comprises a foam.

10. The housing of claim 8 or 9, wherein each of the third lamina(e) of each of the laminate(s) has a tensile modulus that is less than or equal to 1.0 gigapascals (GPa).

11. The housing of any of claims 1-10, wherein the laminate(s) are disposed along at least a majority of the periphery of the plate.

12. The housing of any of claims 1-9, wherein:
the rim includes:
two lengthwise portions extending in a first direction;
two widthwise portions extending in a second direction that is perpendicular to the first direction; and
for corner portions, each connecting one of the lengthwise portions to one of the widthwise linear portions; and
each of the laminate(s) defines at least one of the corner portions.

13. The housing of any of claims 1-12, wherein the sidewall includes one or more polymeric connecting members that are disposed along at least a majority of the periphery of the plate and couple the rim to the plate, each of the connecting member(s) defining at least a portion of the interior surface of the sidewall.

14. The housing of any of claims 1-13, wherein the plate comprises a laminate including:
one or more first laminae, each including glass fibers dispersed within a polymeric matrix material; and
one or more second laminae, each including ceramic fibers and/or carbon fibers dispersed within a polymeric matrix material;
wherein at least one of the first lamina(e) is disposed closer to the front major surface of the plate than is each of the second lamina(e).

15. The housing of claim 14, wherein the laminate of the plate comprises one or more third laminae, wherein:
each of the third lamina(e) is resilient; and
at least one of the third lamina(e) is disposed between and contact one of the first lamina(e) and one of the second lamina(e) of the plate.
